# EUROPEAN PATENT SPECIFICATION

(11) **EP 4 219 250 B1**
(45) Date of publication and mention of the grant of the patent: **07.01.2026**
(21) Application number: 22153691.5
(22) Date of filing: 27.01.2022
(51) Int. Cl.: B60R 25/24, B60R 25/25, B60R 25/30, B60R 25/33

(54) **METHODS, COMPUTER PROGRAMS, AND APPARATUSES FOR AN AUGMENTED REALITY DEVICE AND FOR A KEY OF A VEHICLE, AUGMENTED REALITY DEVICE AND KEY FOR A VEHICLE**
VERFAHREN, COMPUTERPROGRAMME UND GERÄTE FÜR EINE VORRICHTUNG MIT ERWEITERTER REALITÄT UND FÜR EINEN FAHRZEUGSCHLÜSSEL, VORRICHTUNG MIT ERWEITERTER REALITÄT UND FAHRZEUGSCHLÜSSEL
PROCÉDÉS, PROGRAMMES INFORMATIQUES, ET APPAREILS DESTINÉS À UN DISPOSITIF DE RÉALITÉ AUGMENTÉE ET À UNE CLÉ DE VÉHICULE, DISPOSITIF DE RÉALITÉ AUGMENTÉE ET CLÉ DE VÉHICULE

(43) Date of publication of application: 02.08.2023
(73) Proprietor: VOLKSWAGEN AG, 38440 Wolfsburg (DE); Seat, S.A., 08760 Martorell (ES)
(72) Inventor: HAAR, Adrian, 30173 Hannover (DE); MORALES FERNANDEZ, Daniel, 08012 Barcelona (ES)
(74) Representative: 2SPL Patentanwälte PartG mbB

(56) References cited:
- CN-A- 106 157 392
- CN-A- 107 829 610
- KR-B1- 102 029 269
- US-A1- 2016 169 687
- US-A1- 2017 005 826
- US-A1- 2019 047 512
- US-A1- 2019 266 742
- US-A1- 2021 250 178

## Description

The present invention relates to the field of augmented reality and vehicular communication. Embodiments provide methods, computer programs, and apparatuses for an augmented reality device and for a key of a vehicle, an augmented reality device and a key for a vehicle. More particularly, but not exclusively, embodiment relate to a concept for using a key of a vehicle as trigger to display information on the key and an associated vehicle on an augmented reality device.

Keys for vehicles have developed from pure mechanical devices to wireless remote controls that may offer additional features or control to a user. Examples of such additional features are opening of a trunk or windows, honking, flashing, park heating etc. Vehicles' keys are mostly simple casings with just some buttons and do not offer so much information to the user, aside from the function of opening the car and some additional features. Car keys are turning more digital and are being integrated into smartphones and mobile apps, where the user can perform more complex tasks like locating the vehicle, etc. In addition, some providers have developed car keys based on NFC (near field communication) or UWB (ultra wide-band) chips that can be used directly from a smartphone and can be also shared with other users, if desired.

Document KR20210001438A discloses a smart key and a method for informing a user about a position of a vehicle using a GPS. A real image is obtained through a camera of a smart key, which is overlapped with a virtual object indicating the position of the car, and an augmented-reality technique is applied. The smart key for informing the position of the vehicle using GPS comprises a GPS module, a main control unit, and a display unit. The GPS module collects position information. The main control unit calculates the displacement between the pre-recorded position of the vehicle and the current position using the GPS module to obtain the direction and distance of the vehicle. The display unit displays the direction and distance information of the vehicle obtained by the main control unit.

Document US 2017/0005826 A1 describes an apparatus and a method for notifying a position of an object. The apparatus includes a communication circuitry, a processor configured to control the communication circuitry to receive information of an object from an electronic device, control to search for whether or not an object corresponding to the received information is located within a preset range through a preset wireless communication method, and control to perform a notification operation based on a result of the search.

Document US 2019/0266742 A1 discloses a method, including: receiving, at an augmented reality system, a trigger event associated with an entity; determining a location of the entity, wherein the determining comprises identifying at least one characteristic of the entity; and providing, on the augmented reality system, an indication of the determined location. Document KR 102 029 269 B1 relates to a system and method for remotely controlling a vehicle using bidirectional communication based on BLE 5.0. More particularly, it relates to a wide range of communication and a bidirectional communication of the BLE 5.0 standard and describes a system and a method for remotely controlling a vehicle.

Document US 2016/0169687 A1 is about a method for providing a current location of a vehicle and includes detecting and determining whether a smart key approaches the vehicle. Identification information of the smart key is received from the detected smart key. Information related to the current location is transmitted to an external device upon recognizing the inherent identification information to provide guidance to the current location of the vehicle through the external device.

Current solutions do not connect the car key with relevant information from the vehicle. There is a demand for an improved concept for proving information from a vehicle to a user. This demand is met by the appended independent claims which define the present invention.

Embodiments are based on the finding that an augmented reality user interface can be linked to a vehicle's key, where relevant information can be displayed to the user such as current position of the vehicle associated to the key, current range (gasoline/charge) of the vehicle, some functionalities like locking/unlocking the car, etc. It is a further finding that his can be enabled by detecting a user's key from an augmented reality device. For example, the user has any kind of augmented reality device, e.g. augmented reality glasses. The augmented reality device may have some sort of communication with the key, possibly via Bluetooth or other communication technology. The device can identify the vehicle linked to the key and also send/receive commands to the key (if needed), to the vehicle and to other devices (like to other users if the key is being shared).

Embodiments provide a method for an augmented reality device. The method comprises locating a key of a vehicle in the environment of the augmented reality device. The method further comprises displaying information about the key to a user of the augmented reality device. Embodiments may therewith enable information provision based on a vehicle key detected in the environment of the user.

For example, the displaying of the information comprises displaying graphical and/or text information next to the key in the environment. Therewith, embodiments may provide an efficient way to present such information to a user.

In some embodiments the method may further comprise identifying a vehicle associated with the key. Therewith, information on the associated vehicle may be enabled.

For example, the method further comprises communicating with the key to obtain information about the vehicle. Communicating with the key may enable identification of the key and the associated vehicle, which may then be used to obtain further information.

In some embodiments the method may further comprise communicating with the vehicle to obtain information about the vehicle. Such communication may enable to obtain recent information from the vehicle, e.g. sensor data like temperature, image/video data, location, traffic information from the environment of the vehicle, etc. Other embodiments may retrieve information about the vehicle or its status stored in the key or at any other network device.

The method may further comprise displaying the information about the vehicle to the user of the augmented reality device. Hence, embodiments may enable efficient provision of information to a user of a vehicle, even if the user is away from the vehicle. Such provision of information is linked to the key of the vehicle.

For example, the method may further comprise displaying the information about the vehicle next to the key. It is then intuitively clear to the user that the information relates to the vehicle associated with the key. In embodiments the information displayed may be informative, e.g. the information about the vehicle comprises one or more elements of the group of a position of the vehicle, a range of the vehicle, a status of the vehicle, and environmental information from the vehicle. Furthermore, the information about the vehicle may comprise interactive information or elements, such as for feature activation and/or menu navigation. Examples for features that may be activated through interactive information displayed are locking/unlocking of the vehicle, park heating or cooling, window opening and closing, driving instructions (autonomous mode), etc.

Embodiments also provide a method for a key of a vehicle. The method comprises communicating with an augmented reality device of a user and providing information about a vehicle associated with the key to the user. Embodiments may enable interaction between a key of a vehicle and an augmented reality device of a user.

In further embodiments the method may comprise authenticating the user and/or the augmented reality device before providing the information about the vehicle. Embodiments may provide enhanced security by authenticating a user before displaying or providing information about the key or vehicle.

In some embodiments the method may further comprise communicating with the vehicle to obtain the information about the vehicle. This way, at least in some embodiments recent or current information may be provided to a user.

Yet another embodiment is a computer program having a program code for performing a method as described herein, when the computer program is executed on a computer, a processor, or a programmable hardware component.

A further embodiment is an apparatus, which comprises one or more interfaces configured to communicate with one or more components of a vehicle. The apparatus further comprises processing circuitry configured to control the one or more interfaces and to perform a method as described herein. Further embodiments are an augmented reality device and/or a key for a vehicle comprising the apparatus as described herein.

Yet another embodiment is system with embodiments of an augmented reality device and of a key for a vehicle.

Some examples of apparatuses and/or methods will be described in the following by way of example only, and with reference to the accompanying figures, in which
Fig. 1 shows a block diagram of an embodiment of a method for an augmented reality device;
Fig. 2 shows a block diagram of an embodiment of a method for a key of a vehicle;
Fig. 3 shows a block diagram of an embodiment of an apparatus and of an embodiment of an augmented reality device or a key of a vehicle;
Fig. 4 shows a block diagram of an embodiment of a system;
Fig. 5 shows an example of an image generated by an embodiment of an augmented reality device; and
Fig. 6 shows another example of an image generated by an embodiment of an augmented reality device.

Some embodiments are now described in more detail with reference to the enclosed figures. However, other possible embodiments are not limited to the features of these embodiments described in detail. Other embodiments may include modifications of the features as well as equivalents and alternatives to the features. Furthermore, the terminology used herein to describe certain embodiments should not be restrictive of further possible embodiments.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, e.g., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

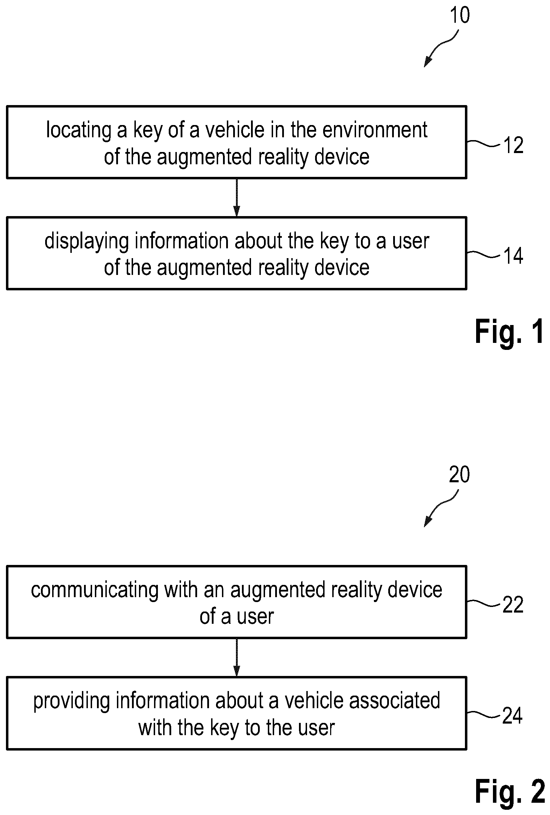

Fig. 1 shows a block diagram of an embodiment of a method 10 for an augmented reality device. The augmented reality device may be any device that allows introducing a virtual object into a perception of the environment of a user. For example, glasses with interactive screens may be used as augmented reality device. Such glasses may allow a user to optically perceive an image of the environment or surrounding and to introduce one or more digital or virtual objects into the environment. Other augmented reality devices may use screens or displays, which display an image of the surrounding with overlayed virtual objects. Examples are smartphones, tablets, laptops, personal computers, etc. Another category of augmented reality devices may use projectors to project virtual objects in an environment or surrounding of a user, such that the user perceives the real representation of the environment and in addition overlayed or projected image information of virtual objects.

In embodiments, the method 10 comprises locating 12 a key of a vehicle in the environment of the augmented reality device. Such locating may be achieved through image processing and detecting of characteristic optical features or properties of the key. In other embodiments the locating may be done by means of triangulation, e.g. using radio or optical signals. Some embodiments may broadcast a signal to which the key responds, and the response signal may serve as basis for the localization. In some embodiments the key may provide information on its location to the augmented realty device or to any other device. For example, the key may be in communication with a local access point or other devices. From such communication it may be able to determine and store its own position in absolute manner or in relation to the local access point or the other devices. The key may then provide its location to the augmented reality device.

As further shown in Fig. 1 the method 10 comprises displaying 14 information about the key to a user of the augmented reality device. The displaying 14 may be implemented as overlaying virtual information, e.g. in terms of displaying graphical and/or text information next to the key in the environment. The user may then perceive according information overlayed to the real image (image of the reality environment or surrounding).

Fig. 2 shows a block diagram of an embodiment of a method 20 for a key of a vehicle. The method 20 for the key of the vehicle comprises communicating 22 with an augmented reality device of a user. Such communication may be wireless, e.g. by means of optical communication, such as via infrared, or radio communication, such as Bluetooth or WiFi or cellular radio communication. The method 20 further comprises providing 24 information about a vehicle associated with the key to the user. Such information may enable the user or the augmented reality device to identify the vehicle.

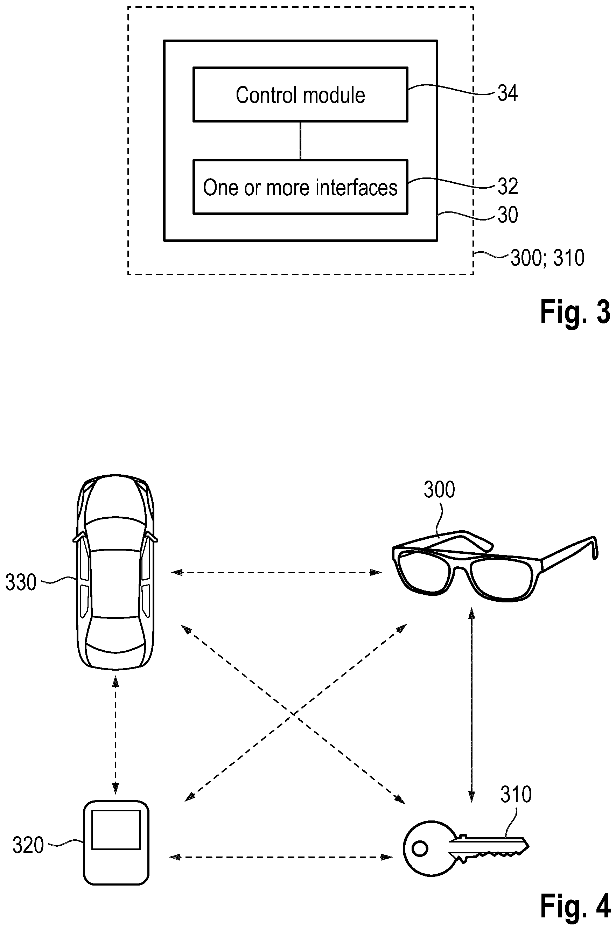

Fig. 3 shows a block diagram of an embodiment of an apparatus 30 and of an embodiment of an augmented reality device 300 or a key of a vehicle 310, which comprise the apparatus 30. The apparatus 30 comprises one or more interfaces 32 configured to communicate with one or more components of a vehicle. The apparatus 30 further comprises processing circuitry 34, which is coupled to the one or more interfaces 32. The processing circuitry 34 is further configured to control the one or more interfaces 32 and to perform a method 10 and/or 20 as described herein. As indicated in dotted lines (optional from the perspective of the apparatus 30) in Fig. 3, further embodiments are an augmented reality device 300 comprising an embodiment of the apparatus 30 and a key 310 for a vehicle comprising an embodiment of the apparatus 30.

The one or more interfaces 32 may be implemented as any means for communicating information, e. g. transmitting, receiving, or transmitting and receiving. For example, the one or more interfaces 32 may correspond to one or more contacts, inputs/outputs, and/or modules to communicate physical signals. The one or more interfaces 32 may comprise a software interface/module and/or an interface to a transmission medium. The one or more interfaces 32 may be configured to take as input and/or provide as output any data that is processed by the processing circuitry 34. The one or more interfaces 32 may enable communication with components of the vehicle, e.g. a key of the vehicle, a modem of the vehicle, a server storing information about the vehicle, etc.

In embodiments the vehicle may be configured to be operated automatically or at least partly automatically and/or operated from remote by a control center. In particular, the vehicle may be a car, a van, a truck, a bus, a bike, an aerial vehicle, a watercraft, or the like.

As further shown in Fig. 3 the respective one or more interfaces 32 are coupled to the processing circuitry 34, which may comprise one or more processors, and which controls the one or more interfaces 32. In examples the processing circuitry 34 may be implemented using one or more processing units, one or more processing devices, any means for processing, such as a processor, processing circuits, a computer or a programmable hardware component being operable with accordingly adapted software. In other words, the described function of the processing circuitry 34 may as well be implemented in software, which is then executed on one or more programmable hardware components. Such hardware components may comprise a general-purpose processor, a Digital Signal Processor (DSP), a micro-controller, central processing unit (CPU), etc.

Fig. 4 shows a block diagram of an embodiment of a system 400. The system 400 comprises embodiments of an augmented reality device 300 and a key 310 of a vehicle. The system 400 further comprises a vehicle 330 and a backhaul server 320. In Fig. 4 the arrows between the augmented reality device 300 and the key of the vehicle 310 indicate the communication in between. The dotted arrows indicated different options for data communication between the vehicle 330, the backhaul server 320, the augmented reality device 300 and the key 310 of the vehicle.

For example, the method 10 as carried out at the augmented reality device 300 may further comprise identifying the vehicle 330 associated with the key. The key 310 may provide an identification such that the augmented reality device 300 can directly address the vehicle 330 or may be enabled to retrieve information about the vehicle 300 from the server 320 using the identification. For example, the identification may be a vehicle identification number. In some embodiments the method 10 may comprise communicating with the key 310 to obtain information about the vehicle 330. Hence, there are several options for communication sequences in embodiments. The key 310 may have the information about the vehicle 330 already stored, the key 310 and/or the augmented reality device 300 may directly communicate with the vehicle 330 to retrieve the information about the vehicle 330, and/or the key 310 and/or the augmented reality device 300 may communicate with the server 320, which has the information about the vehicle 330 stored or which retrieves the information about the vehicle 330 from the vehicle 330 upon request. Hence, different implementations are conceivable. The method 10, as carried out at the augmented reality device 300, may directly or indirectly (via the key 310 or the server 320) communicate with the vehicle 330 to obtain the information about the vehicle 330.

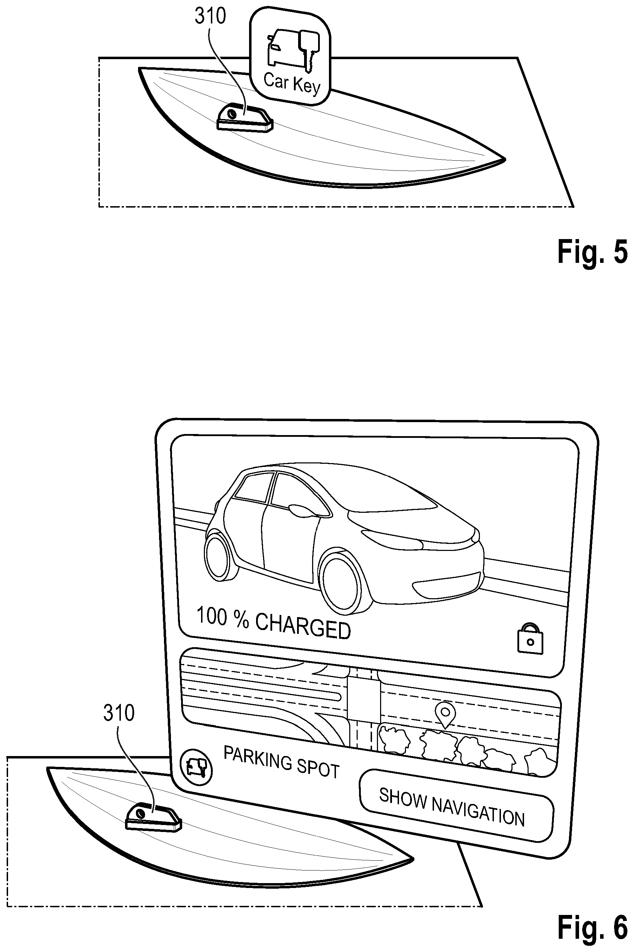

Fig. 5 shows an example of an image generated by an embodiment of an augmented reality device. Fig. 5 shows a key 310, which rests in a bowl. Fig. 5 shows the image as perceived by a user using augmented reality glasses as augmented reality device 300. However, Fig. 5 could as well show a screen of any other augmented reality device. As indicated in Fig. 5 the key 310 is identified by the augmented reality device 300 and a label is displayed next to it. The user can then interact with the label and activate further contents. For example, the user may provide input information to the augmented reality device 300. Such input information may use a gesture or any other input for activation of the label. Examples of such input information are staring/gazing at the label, a predefined hand gesture of the user, a predefined eye movement, pushing a button on an input device, etc.

Fig. 6 shows another example of an image generated by an embodiment of an augmented reality device. In Fig. 6 the label as depicted in Fig. 5 has been activated and information about the vehicle is displayed to the user of the augmented reality device next to the key. Fig. 6 shows an image of the vehicle at the top together with the charging status (100%) and further status information (e.g. the lock indicating that the vehicle is locked). Underneath, there is a bird's eye view showing the vehicle's parking location. At the bottom the vehicle's parking address is displayed and a further interactive menu element "show navigation", which enables further interaction (e.g. display of a route to the vehicle). Further interactive elements or interactive information may be any feature activation of features of the car, e.g. lock/unlock, open trunk for packet delivery or pick-up, or even a request to be picked up by the car, e.g. in an autonomous or tele-operated mode. The information about the vehicle may comprise one or more further elements, such as a status of the vehicle, environmental information from the vehicle, sensor data of the vehicle, etc.

In embodiments the method 20 as carried out at the key 310 of the vehicle may further comprising authenticating the user and/or the augmented reality device 300 before providing the information about the vehicle 330. For example, this may be done by an according pairing or linking process, password authentication, etc. These mechanisms may avoid providing such information or access to unauthorized users. As outlined before, the method 20 may comprise communicating with the vehicle 330, be it directly or indirectly, to obtain the information about the vehicle.

Embodiments may make use of augmented reality to show vehicle related information next to the car key. The communication between the key, the augmented reality device and the car may use wireless or wired communication, e.g. involving a backhaul server 320 as indicated in Fig. 4.

Embodiments may enable easier provision and more accessible information regarding the vehicle next to the vehicle's key. More precise information may be provided using augmented reality. Embodiments may enable an integration of the vehicle's key into a possible scenario, where augmented reality devices may be part of our daily life.

Embodiments may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### List of reference signs

- 10: method for an augmented reality device
- 12: locating a key of a vehicle in the environment of the augmented reality device
- 14: displaying information about the key to a user of the augmented reality device

- 20: method for a key of a vehicle
- 22: communicating with an augmented reality device of a user
- 24: providing information about a vehicle associated with the key to the user

- 30: apparatus
- 32: one or more interfaces
- 34: processing circuitry

- 300: augmented reality device
- 310: key
- 320: server
- 330: vehicle

- 400: system

## Claims

1. A method (10) for an augmented reality device (300), the method (10) comprising locating (12) a key (310) of a vehicle (330) in the environment of the augmented reality device (300);
displaying (14) information about the key (310) to a user of the augmented reality device (300);
the method (10) further comprising
communicating with the key (310) and communicating with the vehicle (330) to obtain information about the vehicle (330);
displaying the information about the vehicle (330) to the user of the augmented reality device (300) next to the key (310).

2. The method (10) of claim 1, wherein displaying (14) of the information comprises displaying graphical and/or text information next to the key (310) in the environment.

3. The method (10) of one of the claims 1 or 2, further comprising identifying the vehicle (330) associated with the key (310).

4. The method (10) of one of the claims 1 to 3, wherein the information about the vehicle (330) comprises one or more elements of the group of a position of the vehicle (330), a range of the vehicle (330), a status of the vehicle (330), and environmental information from the vehicle (330).

5. A computer program having a program code for performing a method (10) according to any one of claims 1 to 4, when the computer program is executed on a computer, a processor, or a programmable hardware component of the augmented reality device (300) of claim 7.

6. An apparatus (30) for an augmented reality device (300), comprising:
one or more interfaces (32) configured to communicate with a key of a vehicle (330) and the vehicle (330); and
processing circuitry (34) configured to control the one or more interfaces (32) and to perform a method (10) according to any of claims 1 to 4.

7. An augmented reality device (300) comprising the apparatus (30) according to claim 6.

## Patentansprüche

1. Verfahren (10) für eine Augmented-Reality-Vorrichtung (300), das Verfahren (10) umfassend ein Lokalisieren (12) eines Schlüssels (310) eines Fahrzeugs (330) in der Umgebung der Augmented-Reality-Vorrichtung (300);
Anzeigen (14) von Informationen über den Schlüssel (310) für einen Benutzer der Augmented-Reality-Vorrichtung (300);
das Verfahren (10) ferner umfassend
Kommunizieren mit dem Schlüssel (310) und Kommunizieren mit dem Fahrzeug (330), um Informationen über das Fahrzeug (330) zu erhalten;
Anzeigen der Informationen über das Fahrzeug (330) für den Benutzer der Augmented-Reality-Vorrichtung (300) neben dem Schlüssel (310).

2. Verfahren (10) nach Anspruch 1, wobei das Anzeigen (14) der Informationen das Anzeigen von grafischen und/oder Textinformationen neben dem Schlüssel (310) in der Umgebung umfasst.

3. Verfahren (10) nach einem der Ansprüche 1 oder 2, ferner umfassend ein Identifizieren des Fahrzeugs (330), das dem Schlüssel (310) zugeordnet ist.

4. Verfahren (10) nach einem der Ansprüche 1 bis 3, wobei die Informationen über das Fahrzeug (330) ein oder mehrere Elemente der Gruppe aus einer Position des Fahrzeugs (330), einer Reichweite des Fahrzeugs (330), einem Status des Fahrzeugs (330) und Umgebungsinformationen von dem Fahrzeug (330) umfassen.

5. Computerprogramm, das einen Programmcode zum Durchführen eines Verfahrens (10) nach einem der Ansprüche 1 bis 4 aufweist, wenn das Computerprogramm auf einem Computer, einem Prozessor oder einer programmierbaren Hardwarekomponente der Augmented-Reality-Vorrichtung (300) nach Anspruch 7 ausgeführt wird.

6. Einrichtung (30) für eine Augmented-Reality-Vorrichtung (300), umfassend:
eine oder mehrere Schnittstellen (32), die konfiguriert sind, um mit einem Schlüssel eines Fahrzeugs (330) und dem Fahrzeug (330) zu kommunizieren; und
eine Verarbeitungsschaltung (34), die konfiguriert ist, um die eine oder die mehreren Schnittstellen (32) zu steuern und um ein Verfahren (10) nach einem der Ansprüche 1 bis 4 durchzuführen.

7. Augmented-Reality-Vorrichtung (300), umfassend die Einrichtung (30) nach Anspruch 6.

## Revendications

1. Procédé (10) pour un dispositif de réalité augmentée (300), le procédé (10) comprenant la localisation (12) d'une clé (310) d'un véhicule (330) dans l'environnement du dispositif de réalité augmentée (300) ;
l'affichage (14) d'informations concernant la clé (310) à l'intention d'un utilisateur du dispositif de réalité augmentée (300) ;
le procédé (10) comprenant en outre
la communication avec la clé (310) et la communication avec le véhicule (330) pour obtenir des informations concernant le véhicule (330) ;
l'affichage des informations concernant le véhicule (330) à l'intention de l'utilisateur du dispositif de réalité augmentée (300) situé à côté de la clé (310).

2. Procédé (10) selon la revendication 1, dans lequel l'affichage (14) des informations comprend l'affichage d'informations graphiques et/ou textuelles à côté de la clé (310) dans l'environnement.

3. Procédé (10) selon l'une des revendications 1 ou 2, comprenant en outre l'identification du véhicule (330) associé à la clé (310).

4. Procédé (10) selon l'une des revendications 1 à 3, dans lequel les informations concernant le véhicule (330) comprennent un ou plusieurs éléments du groupe constitué d'une position du véhicule (330), d'une portée du véhicule (330), d'un état du véhicule (330) et des informations d'environnement du véhicule (330).

5. Programme informatique ayant un code de programme permettant de réaliser un procédé (10) selon l'une quelconque des revendications 1 à 4, lorsque le programme informatique est exécuté sur un ordinateur, un processeur, ou un composant matériel programmable d'un dispositif de réalité augmentée (300) selon la revendication 7.

6. Appareil (30) pour un dispositif de réalité augmentée (300), comprenant :
une ou plusieurs interfaces (32) configurées pour communiquer avec une clé d'un véhicule (330) et le véhicule (330) ; et
une circuiterie de traitement (34) configurée pour commander la ou les interfaces (32) et pour réaliser un procédé (10) selon l'une quelconque des revendications 1 à 4.

7. Dispositif de réalité augmentée (300) comprenant l'appareil (30) selon la revendication 6.
